# EUROPÄISCHE PATENTANMELDUNG

(11) **EP 2 468 834 A1**
(43) Veröffentlichungstag der Anmeldung: **27.06.2012**
(21) Anmeldenummer: 10196683.6
(22) Anmeldetag: 23.12.2010
(51) Int. Cl.: C09J 163/00, B62D 27/02, C09J 5/06

(54) **Hitzehärtende Dichtstoffzusammensetzungen mit schneller Hautbildung und hoher Zugfestigkeit**

(71) Anmelder: Sika Technology AG, 6340 Baar (CH)
(72) Erfinder: Voci, Antonio, 8800 Thalwil (CH); Kramer, Andreas, 8006 Zürich (CH); Schulenburg, Jan Olaf, 8610 Uster (CH); Gutgsell, Michael, 8610 Uster (CH); Burckhardt, Urs, 8049 Zürich (CH)
(74) Vertreter: Sika Patent Attorneys

(57) **Zusammenfassung**

Die vorliegende Erfindung betrifft hitzehärtende Dichtstoffzusammensetzungen, welche mindestens Epoxidharz, Dicyandiamid oder ein Aminkomplex einer Lewis-Säure, Isocyanatgruppen aufweisendes Polyurethanpolymer (**PUP**) sowie Polyaldimin umfassen. Diese einkomponentigen Dichtstoffzusammensetzungen zeichnen sich durch eine schnelle Hautbildung und eine hohe Zugfestigkeit aus. Aufgrund der kurzen Hautbildungszeit sind sie bestens für den Einsatz als Dichtstoffe im Automobil-Rohbau geeignet, da sie exzellent mit einem KTL-Lack überschichtet werden können.

## Beschreibung

### Technisches Gebiet

Die Erfindung betrifft das Gebiet der Dichtstoffe, insbesondere für den Rohbau von Fahrzeugkarosserien.

### Stand der Technik

Im Rohbau von Fahrzeugen werden einzelne Metallbleche miteinander verbunden. Die verwendeten Bleche sind beölt, um die Korrosion möglichst zu verhindern. Hierbei werden die benötigten Bleche in passende Form geschnitten, insbesondere gestanzt, und umgeformt. Durch das Schneiden bedingt, weisen die Schnittflächen keine, bzw. geringere Ölbeschichtung auf.

Typischerweise durchläuft die Karosserie am Ende des Rohbaus ein KTL (Kathodische Tauch-Lackierung)-Bad, in dem diese mit einem sogenannten KTL-Lack beschichtet wird, welcher dann in einem KTL-Ofen eingebrannt wird. Eine gute und vollflächige KTL-Lackierung ist eine Basis für einen langfristigen Gebrach des Fahrzeugs, da er einen wesentlichen Beitrag zur Korrosionsbeständigkeit leistet. Es zeigt sich jedoch, dass insbesondere an den Schnittflächen der Bleche sich der KTL-Lack nicht oder nur in sehr geringer Dicke ablagert, weshalb diese Stellen besonders kritisch sind. Es wurde deshalb bereits versucht, an diesen Schnittflächen, bzw. Schnittkanten, Dichtstoffe zu applizieren. Hierbei traten jedoch bisher häufig Probleme beim Gebrauch eines derartigen Dichtstoffes auf. In den einen Fällen haftet der Dichtstoff nicht auf den der Schnittfläche benachbarten Bereichen, welche beölt sind. Wenn das Öl vor Applikation des Dichtstoffes in diesen Bereichen entfernt wird, verlagert sich das Problem lediglich von der Schnittfläche zur Grenze des Dichtstoffes, womit dies ist kein gangbarer Lösungsansatz ist. In anderen Fällen ist der Dichtstoff beim Durchlaufen der Reinigung und des KTL-Bades noch nicht ausgehärtet und löst sich während der Reinigung oder im KTL-Bad, was einerseits zu einer unerwünschten Kontaminierung des KTL-Bades führt und andererseits zur Schwächung des Dichtstoffes. Um dieses Problem zu lösen, wurde beispielsweise in WO2008/077918 A1 vorgeschlagen, dass ein UV-vernetzender oder eine wärmevernetzender Dichtstoff oder aber ein zweikomponentiger Dichtstoff in Form eines Epoxidharzdichtstoffs oder Polyurethandichtstoffs oder (Meth)acrylatdichtstoffs verwendet wird. Dies hat jedoch den grossen Nachteil, dass entweder zusätzliche Gerätschaften für die Wärme- oder UV-Vernetzung an die Fertigungslinie gebracht werden müssen, bzw. dass Probleme mit der Topfzeit bzw. mit der genauen Dosierung der zweikomponentigen Dichtstoffe auftreten können. Zudem sind Applikationsanlagen für zweikomponentige Dichtstoffe bedeutend teuer in der Anschaffung und dem Unterhalt als solche für einkomponentige Dichtstoffe.

### Darstellung der Erfindung

Die Aufgabe der vorliegenden Erfindung ist es daher, eine einkomponentige Dichtstoffzusammensetzung zur Verfügung zu stellen, welche gut auf beölten Blechen haftet, vor dem Eintauchen in ein Lackbad nicht mit Wärme oder UV-Strahlung ausgehärtet werden muss und trotzdem schnell Festigkeit aufbaut.

Überraschenderweise wurde gefunden, dass hitzehärtende Dichtstoffzusammensetzungen gemäss Anspruch 1 diese Aufgabe lösen.

Die hitzehärtenden Dichtstoffzusammensetzungen verfügen über einen dualen Aushärtemechanismus. Einerseits wird durch die Reaktion von Polyisocyanaten mit Polyaldiminen im Kontakt mit Luft, bzw. der Luftfeuchtigkeit, an der Oberfläche des Dichtstoffes schnell eine Haut gebildet, welche gewährleistet, dass der Dichtstoff das KTL-Bad unbeschadet durchlaufen kann. Auf dem Dichtstoff kann der Lack in guter Qualität abgeschieden werden. In einer weiteren Stufe härtet der Dichtstoff durch Wärme, wie sie im KTL-Ofen herrscht, zu einem vollständig gehärteten Dichtstoff aus, welcher über eine hohe Zugfestigkeit verfügt.

Die hitzehärtende Dichtstoffzusammensetzung eignet sich deshalb insbesondere zum Einsatz als Dichtstoff im Rohbau von Fahrzeugkarosserien.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft hitzehärtende Dichtstoffzusammensetzungen, welche umfassen:
- mindestens ein Epoxidharz (**A**) mit durchschnittlich mehr als einer Epoxidgruppe pro Molekül;
- mindestens einen hitzeaktivierbaren Härter oder Beschleuniger (**B**) ausgewählt aus der Gruppe bestehend aus Dicyandiamid oder einem Aminkomplex einer Lewis-Säure;
- mindestens ein Isocyanatgruppen aufweisendes Polyurethanpolymer (**PUP**); sowie
- mindestens ein Polyaldimin (**PA**).

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide (Houben-Weyl, "Methoden der organischen Chemie", Thieme Verlag, Stuttgart, 1987, Band E20, Seite 1561).

Mit "Poly" beginnende Substanznamen wie Polyisocyanat, Polyaldimin, Polyamin, Polyol, Polymerkaptane oder Polyglycidylether bezeichnen im vorliegenden Dokument Substanzen, die formal zwei oder mehr der in ihrem Namen vorkommenden funktionellen Gruppen pro Molekül enthalten.

Der Begriff "Molekulargewicht" bezeichnet im vorliegenden Dokument das Molekulargewichtsmittel Mₙ.

Als Raumtemperatur wird im vorliegenden Dokument eine Temperatur von 25°C verstanden.

Die fett markierten Bezeichnungen wie **A, PI, PA, A, B, B', PUP, PAM, ALD, Y1, Y2, C, F, SM, G, KA, KN, R, S, S2** oder dergleichen im vorliegenden Dokument dienen lediglich für das bessere Leseverständnis und Identifizierung.

Als "Fahrzeug" gilt für dieses Dokument jegliches Fortbewegungsmittel zu Wasser, zu Land und in der Luft. Insbesondere sind derartige Fortbewegungsmittel Schiffe, Radfahrzeuge wie Automobile, Busse, Cars, Lastkraftwagen sowie Schienenfahrzeuge wie Strassenbahnen und Bahnen.

Der Begriff "primäre Aminogruppe" bezeichnet im vorliegenden Dokument eine Aminogruppe in der Form einer NH₂-Gruppe, die an einen organischen Rest gebunden ist. Als "primäres Amin" gilt demzufolge ein Molekül, welches eine primäre Aminogruppe aufweist.

Der Begriff "sekundäre Aminogruppe" bezeichnet eine Aminogruppe, in der das Stickstoffatom an zwei organische Reste gebunden ist, welche auch gemeinsam Teil eines Rings sein können. Als "sekundäres Amin" gilt demzufolge ein Molekül, welches eine sekundäre Aminogruppe aufweist.

Der Begriff "tertiäre Aminogruppe" bezeichnet eine Aminogruppe, in der das Stickstoffatom an drei organische Reste gebunden ist, wobei zwei dieser Reste auch gemeinsam Teil eines Rings sein können (=tertiärer Amin-Stickstoff). Als "tertiäres Amin" gilt demzufolge ein Molekül, welches eine tertiäre Aminogruppe aufweist.

Als "aliphatisch" wird ein Amin oder eine Aminogruppe bezeichnet, worin das Stickstoffatom ausschliesslich an aliphatische, cycloaliphatische oder arylaliphatische Reste gebunden ist.

Als "Epoxidgruppe" oder "Epoxygruppe" wird das Strukturelement 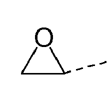 oder 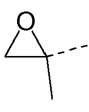 bezeichnet.

Als "Glycidylether" wird ein Ether von 2,3-Epoxy-1-propanol (Glycidol) bezeichnet.

Die gestrichelten Linien in den Formeln dieses Dokumentes stellen jeweils die Bindung zwischen dem jeweiligen Substituenten und dem dazugehörigen Molekülrest dar.

Die hitzehärtende Dichtstoffzusammensetzung ist einkomponentig.

Als "einkomponentig" wird im vorliegenden Dokument eine härtbare Zusammensetzung bezeichnet, bei welcher alle Bestandteile der Zusammensetzung vermischt im gleichen Gebinde gelagert werden, und welche bei Raumtemperatur über einen längeren Zeitraum lagerstabil ist, sich also in ihren Anwendungs- oder Gebrauchseigenschaften durch die Lagerung nicht oder nur unwesentlich verändert, und welche nach der Applikation durch die Einwirkung von Feuchtigkeit und/oder Hitze aushärtet.

Das Epoxidharz (**A**) mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxid-Festharze weisen die Formel (X) auf

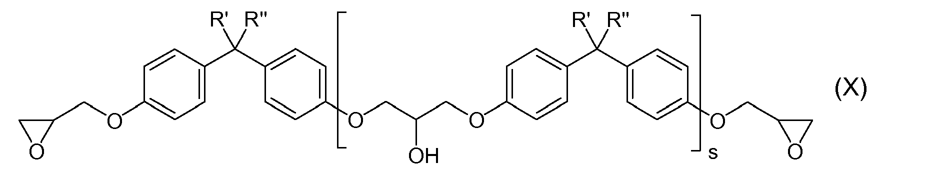

Hierbei stehen die Substituenten R' und R" unabhängig voneinander entweder für H oder CH₃. Weiterhin steht der Index s für einen Wert von > 1.5, insbesondere von 2 bis 12.

Derartige Epoxid-Festharze sind kommerziell erhältlich, beispielsweise von Dow, Huntsman oder Hexion.

Verbindungen der Formel (X) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist.

Bevorzugte Epoxid-Flüssigharze weisen die Formel (XI) auf

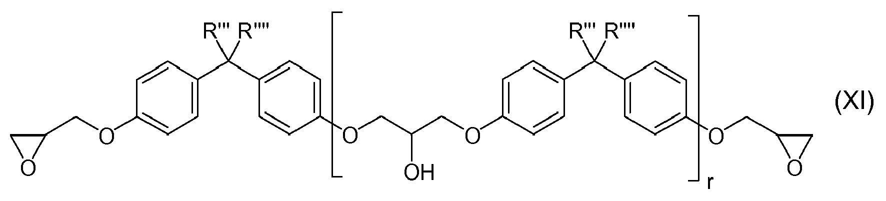

Hierbei stehen die Substituenten R'" und R"" unabhängig voneinander entweder für H oder CH₃. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung 'A/F' verweist hierbei auf eine Mischung von Aceton mit Formaldehyd, welche als Edukt bei dessen Herstellung verwendet wird). Solche Flüssigharze sind beispielsweise als Araldite^{®} GY 250, Araldite^{®} PY 304, Araldite^{®} GY 282 (Huntsman) oder D.E.R.™ 331 oder D.E.R.™ 330 (Dow) oder Epikote 828 (Hexion) erhältlich.

Weiterhin geeignet als Epoxidharz (**A**) sind sogenannte Novolake. Diese weisen insbesondere die folgende Formel auf: 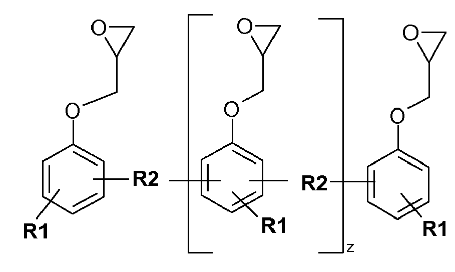 mit R2= 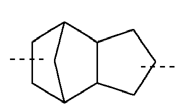 oder CH₂, **R1** = H oder Methyl und z = 0 bis 7.

Insbesondere handelt es sich hierbei um Phenol- oder Kresol-Novolake (**R2** = CH₂).

Solche Epoxidharze sind unter dem Handelnamen EPN oder ECN sowie Tactix^{®} 556 von Huntsman oder unter der Produktereihe D.E.N.™ von Dow Chemical kommerziell erhältlich.

Bevorzugt stellt das Epoxidharz (**A**) ein Epoxid-Flüssigharz der Formel (XI) dar. In einer noch mehr bevorzugten Ausführungsform enthält die hitzehärtende Epoxidharzzusammensetzung sowohl mindestens ein Epoxid-Flüssigharz der Formel (XI) als auch mindestens ein Epoxid-Festharz der Formel (X).

Der Anteil von Epoxidharz (**A**) beträgt typischerweise zwischen 1 und 50 Gew.-%, insbesondere zwischen 3 und 30 Gew.-%, bevorzugt zwischen 5 und 20 Gew.-%, bezogen auf das Gewicht der hitzehärtenden Dichtstoffzusammensetzung.

Bevorzugt beträgt das Gewichtsverhältnis von Epoxidharz (**A**) zu Isocyanatgruppen aufweisendes Polyurethanpolymer (**PUP**) zwischen 0.1 bis 0.5, insbesondere zwischen 0.15 bis 0.4, bevorzugt zwischen 0.2 bis 0.3.

Die hitzehärtende Dichtstoffzusammensetzung enthält ferner mindestens einen hitzeaktivierbaren Härter oder Beschleuniger (**B**) ausgewählt aus der Gruppe bestehend aus Dicyandiamid oder einem Aminkomplex einer Lewis-Säure. Sowohl Dicyandiamid wie auch die Aminkomplexe von LewisSäuren sind bei Raumtemperatur zusammen mit Epoxidharzen weitgehend stabil. Erst bei erhöhten Temperaturen werden sie aktiv und führen zur Aushärtung der Epoxidharze. Die Aktivierungstemperatur ist abhängig vom verwendeten hitzeaktivierbaren Härter oder Beschleuniger (B) und liegt typischerweise über 120°C.

Der hitzeaktivierbare Härter für Epoxidharze in Form von Dicyandiamid oder eines Aminkomplexes einer Lewis-Säure ist für die vorliegende Erfindung ein wesentliches Element. Obwohl Dicyandiamid und Aminkomplexe einer Lewis-Säure für den Fachmann in der Epoxychemie bekannte hitzeaktivierbare Härter oder Beschleuniger für Epoxidharze sind, wurde überraschenderweise gefunden, dass sich deren Zusatz auch in Mischungen von Polyisocyanaten äusserst vorteilhaft auf die Hautbildung sowie auf die Haftung und die Zugfestigkeit auswirkt.

Es ist bevorzugt, dass das Dicyandiamid in feinteiliger Form vorliegt und eine mittlere Teilchengrösse von kleiner als 12 µm, insbesondere von 1 bis 10 µm, bevorzugt zwischen 5 und 9 µm, aufweist. Die Teilchengrösse wird hierbei mittels Sieb bestimmt.

Beim Aminkomplex einer Lewis-Säure handelt es sich um Komplexe, welche zwischen einem Amin und einer Lewis-Säure gebildet werden. Als Amin geeignet sind insbesondere Amine mit einem Molekulargewicht von weniger als 130 g/mol, insbesondere zwischen 40 und 110 g/mol, bevorzugt zwischen 40 und 90 g/mol. Insbesondere handelt es sich um tertiäre oder sekundäre Amine. Als tertiäre Amine sind insbesondere Trialkylamine, wie Triethylamin, Triethylamin, Tripropylamin, Tributylamin oder Dimethylpropylamin, geeignet. Weiterhin sind auch aromatische tertiäre Amine, wie Dimethylbenzylamin oder Dimethylaminopyridin, sowie stickstoffaromatische Amine, wie Pyridin, geeignet.

Als sekundäre Amine sind insbesondere Dialkylamine, wie Dimethylamin, Diethylamine, Dipropylamin oder Dibutylamin, sowie cycloaliphatische sekundäre Amine, wie Pyrrolidin, Piperdin oder Morpholin, geeignet.

Bei der Lewis-Säure handelt es sich insbesondere um Bortrihalogenide, insbesondere um BCl₃ oder BF₃. Bevorzugt ist BCl₃.

Als besonders geeigneter Aminkomplex einer Lewis-Säure hat sich der BCl₃-Diethylamin-Komplex sowie der als OMICURE™ BC-120 (von Emerald Performance Materials) erhältliche BCl₃-Aminkomplex erwiesen.

Der Anteil von Dicyandiamid und/oder vom Aminkomplex einer Lewis-Säure beträgt typischerweise zwischen 0.05 und 7 Gew.-%, insbesondere zwischen 0.1 und 5 Gew.-%, bevorzugt zwischen 0.25 und 2 Gew.-%, bezogen auf das Gewicht der hitzehärtenden Dichtstoffzusammensetzung.

Die hitzehärtende Dichtstoffzusammensetzung enthält ferner mindestens ein Isocyanatgruppen aufweisendes Polyurethanpolymer (**PUP**).

Ein geeignetes Polyurethanpolymer (**PUP**) ist insbesondere erhältlich aus der Umsetzung von mindestens einem Polyol mit mindestens einem Polyisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.3 bis 5, insbesondere eines von 1.5 bis 3, eingehalten wird. Unter dem "NCO/OH-Verhältnis" wird das Verhältnis der Anzahl der eingesetzten Isocyanatgruppen zu der Anzahl der eingesetzten Hydroxylgruppen verstanden. Bevorzugt verbleibt im Polyurethanpolymer (**PUP**) nach der Umsetzung aller Hydroxylgruppen des Polyols ein Gehalt an freien Isocyanatgruppen von 0.5 bis 15 Gewichts-%, besonders bevorzugt von 0.5 bis 5 Gewichts-%.

Gegebenenfalls kann das Polyurethanpolymer (**PUP**) unter Mitverwendung von Weichmachern hergestellt werden, wobei die verwendeten Weichmacher keine gegenüber Isocyanaten reaktive Gruppen enthalten.

Als Polyole für die Herstellung eines Polyurethanpolymers (PUP) können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten. Besonders geeignet sind Polyoxyalkylendiole oder Polyoxyalkylentriole, insbesondere Polyoxyethylen- und Polyoxypropylendi- und -triole. Speziell geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol. Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.

Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.

Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylenoder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro^{®} (früher Hycar^{®}) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Diese genannten Polyole weisen bevorzugt ein mittleres Molekulargewicht von 250 - 30'000 g/mol, insbesondere von 400 - 20'000 g/mol, und weisen bevorzugt eine mittlere OH-Funktionalität im Bereich von 1.6 bis 3 auf.

Als Polyole bevorzugt sind Polyether-, Polyester-, Polycarbonat-, Polyacrylatpolyole und Polykohlenwasserstoffpolyole, bevorzugt Di- und Triole. Besonders bevorzugt sind Polykohlenwasserstoffpolyole, insbesondere polyhydroxyfunktionelle Polyolefine und polyhydroxyfunktionelle Polymere von Dienen, insbesondere von 1,3-Butadien.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanpolymers (**PUP**) mitverwendet werden. Ebenso können kleine Mengen an Polyolen mit einer mittleren OH-Funktionalität von mehr als 3 mitverwendet werden, beispielsweise Zuckerpolyole.

Als Polyisocyanat für die Herstellung eines Isocyanatgruppen aufweisenden Polyurethanpolymers (**PUP**) werden aromatische oder aliphatische Polyisocyanate, insbesondere die Diisocyanate, eingesetzt.

Als aromatische Polyisocyanate eignen sich insbesondere monomere Di- oder Triisocyanate wie 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)-benzol, Tris-(4-isocyanatophenyl)-methan, Tris-(4-isocyanatophenyl)-thiophosphat, Oligomere und Polymere der vorgenannten Isocyanate, sowie beliebige Mischungen der vorgenannten Isocyanate. Bevorzugt sind MDI und TDI.

Als aliphatische Polyisocyanate eignen sich insbesondere monomere Di- oder Triisocyanate wie 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, Dimer- und Trimerfettsäureisocyanate wie 3,6-Bis-(9-isocyanatononyl)-4,5-di-(1-heptenyl)-cyclohexen (Dimeryldiisocyanat), α,α,α',α',α",α"-Hexamethyl-1,3,5-mesitylentriisocyanat, Oligomere und Polymere der vorgenannten Isocyanate, sowie beliebige Mischungen der vorgenannten Isocyanate. Bevorzugt sind HDI und IPDI.

Bevorzugt sind Polyurethanpolymere (**PUP**) mit aromatischen Isocyanatgruppen.

Der Anteil von Isocyanatgruppen aufweisendem Polyurethanpolymer (PUP) beträgt typischerweise zwischen 10 und 70 Gew.-%, insbesondere zwischen 15 und 50 Gew.-%, bevorzugt zwischen 20 und 40 Gew.-%, bezogen auf das Gewicht der hitzehärtenden Dichtstoffzusammensetzung.

Besonders bevorzugt wird das Isocyanatgruppen aufweisende Polyurethanpolymer (PUP) in Gegenwart von Epoxidharz (A) mit durchschnittlich mehr als einer Epoxidgruppe pro Molekül, insbesondere von Epoxid-Flüssigharz der Formel (XI), in einer Vormischung (VM) hergestellt. Es ist dem Fachmann klar, dass eine Vormischung (**VM**) neben dem Isocyanatgruppen aufweisenden Polyurethanpolymer (**PUP**) und dem Epoxidharz (**A**) auch Anteile von Umsetzungsprodukten des Isocyanatgruppen aufweisenden Polyurethanpolymers (**PUP**), respektive der zu dessen Herstellung eingesetzten Polyisocyanate, mit den im Epoxyharz (**A**) vorkommenden hydroxyfunktionellen Substanzen, insbesondere der Verbindung der Formel (XII), enthalten.

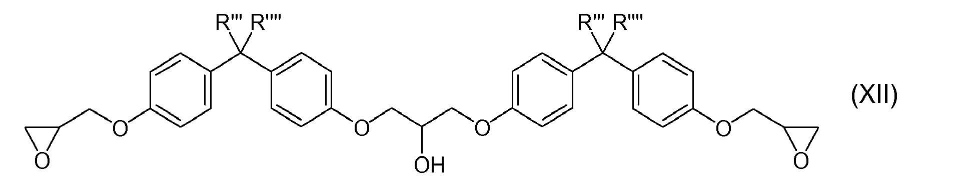

Die Vormischung (VM) weist also sowohl Isocyanatgruppen als auch Epoxidgruppen auf.

Die hitzehärtende Dichtstoffzusammensetzung enthält ferner mindestens ein Polyaldimin (**PA**).

Polyaldimine (**PA**) lassen sich aus Polyaminen (**PAM**) mit zwei oder mehr primären Aminogruppen und Aldehyden herstellen.

Als Polyamine (**PAM**) mit zwei oder mehr primären Aminogruppen geeignet sind insbesondere
- aliphatische, cycloaliphatische oder arylaliphatische Diamine, beispielsweise Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin und Methyl-bis-(3-aminopropyl)amin, 1,2-, 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2,6}]-decan, 1,4-Diamino-2,2,6-trimethylcyclohexan (TMCDA), 3,9-Bis-(3-amino-propyl)-2,4,8,10-tetraoxaspiro[5.5]undecan sowie 1,3- und 1,4-Xylylendiamin;
- Ethergruppen-haltige aliphatische Diamine, beispielsweise Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin und höhere Oligomere dieser Diamine, Bis-(3-aminopropyl)-polytetrahydrofurane und andere Polytetrahydrofuran-diamine mit Molekulargewichten im Bereich von beispielsweise 350 bis 5200, sowie Polyoxyalkylen-Diamine. Letztere stellen typischerweise Produkte aus der Aminierung von Polyoxyalkylen-Diolen dar und sind beispielsweise erhältlich unter dem Namen Jeffamine^{®} (von Huntsman Chemicals), unter dem Namen Polyetheramin (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} D-2000, Jeffamine^{®} D-4000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559; Polyetheramin D 230, Polyetheramin D 400 und Polyetheramin D 2000, PC Amine^{®} DA 250, PC Amine^{®} DA 400, PC Amine^{®} DA 650 und PC Amine^{®} DA 2000;
- aliphatische Triamine wie 4-Aminomethyl-1,8-octandiamin, 1,3,5-Tris(aminomethyl)-benzol, 1,3,5-Tris-(aminomethyl)-cyclohexan;
- Polyoxyalkylen-Triamine, welche typischerweise Produkte aus der Aminierung von Polyoxyalkylen-Triolen darstellen und beispielsweise erhältlich sind unter dem Handelsnamen Jeffamine^{®} (von Huntsman Chemicals), unter dem Namen Polyetheramin (von BASF) oder unter dem Namen PC Amine^{®} (von Nitroil), wie zum Beispiel Jeffamine^{®} T-403, Jeffamine^{®} T-5000; Polyetheramin T403, Polyetheramin T5000; und PC Amine^{®} TA 403, PC Amine^{®} TA 5000.

Als Polyamine (**PAM**) bevorzugt sind Polyamine, welche ausgewählt sind aus der Gruppe bestehend aus 1,6-Hexamethylendiamin, MPMD, DAMP, IPDA, TMD, 1,3-Xylylendiamin, 1,3-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan, 1,2-, 1,3- und 1,4-Diaminocyclohexan, 1,4-Diamino-2,2,6-trimethylcyclohexan, 3,6-Dioxaoctan-1,8-diamin, 4,7-Dioxadecan-1,10-diamin, 4-Aminomethyl-1,8-octandiamin und Polyoxyalkylen-Polyamine mit zwei oder drei Aminogruppen, insbesondere die unter dem Handelsnamen Jeffamine^{®} erhältlichen Typen D-230, D-400, D-2000, T-403 und T-5000 von Huntsman und dazu analoge Verbindungen von BASF oder Nitroil, sowie Mischungen der genannten Polyamine. Als Polyamine (**PAM**) besonders bevorzugt sind die genannten Diamine.

Als Aldehyde eigenen sich grundsätzlich jegliche Aldehyde.

Es hat sich gezeigt, dass es von Vorteil ist, wenn das Polyaldimin (PA) am Kohlenstoffatom in alpha-Stellung zum Kohlenstoff der Aldiminogruppe kein Wasserstoffatom aufweist. Derartige Aldimine können - im Gegensatz zu Aldiminen, welche in alpha-Stellung zum Kohlenstoff Wasserstoffatome aufweisen (siehe unten stehendes Formelschema) - keine tautomeren Formen (Enamin) bilden:

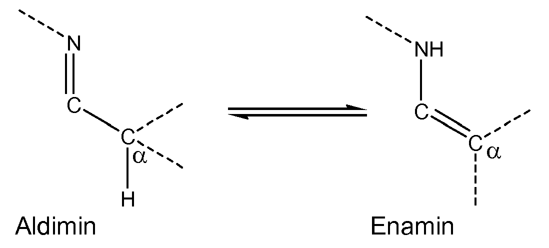

Es zeigte sich, dass mit derartigen Polyaldiminen ohne Wasserstoffatome in alpha-Stellung besonders lagerstabile Zusammensetzungen erhalten werden können.

Derartige Polyaldimine lassen sich aus Polyaminen (**PAM**) mit zwei oder mehr primären Aminogruppen der Formel und Aldehyden der Formel (II) oder (III) herstellen.

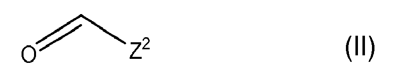

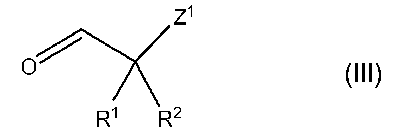

Hierbei stehen R¹ und R² entweder unabhängig voneinander jeweils für einen einwertigen Kohlenwasserstoffrest mit 1 bis 12 C-Atomen, oder aber R¹ und R² stehen zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist.

Weiterhin steht Z¹ für einen einwertigen Kohlenwasserstoffrest mit 1 bis 32 C-Atomen, welcher gegebenenfalls mindestens ein Heteroatom, insbesondere Sauerstoff in der Form von Ether-, Carbonyl- oder Ester-Gruppen, oder insbesondere Stickstoff in Form von tertiären Aminogruppen, aufweist.

Weiterhin steht Z² entweder für eine substituierte oder unsubstituierte Aryl- oder Heteroaryl-Gruppe, welche eine Ringgrösse von 5 bis 8, bevorzugt 6, Atomen aufweist, oder für 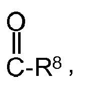 wobei R⁸ für ein Wasserstoffatom oder für eine Alkoxygruppe steht, oder für eine substituierte oder unsubstituierte Alkenyl- oder Arylalkenylgruppe mit mindestens 6 C-Atomen steht.

Beispiele für derartige Aldehyde der Formel (II) sind aromatische Aldehyde, wie Benzaldehyd, 2- und 3- und 4-Tolualdehyd, 4-Ethyl- und 4-Propyl- und 4-Isopropyl und 4-Butyl-benzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- und Trialkoxybenzaldehyde, 2-, 3- und 4-Nitrobenzaldehyd, 2- und 3- und 4-Formylpyridin, 2-Furfuraldehyd, 2-Thiophencarbaldehyd, 1- und 2-Naphthylaldehyd, 3- und 4-Phenyloxy-benzaldehyd, Chinolin-2-carbaldehyd und dessen 3-, 4-, 5-, 6-, 7- und 8-Stellungsisomere, sowie Anthracen-9-carbaldehyd; sowie weiterhin Glyoxal, Glyoxalsäureester wie zum Beispiel Glyoxalsäuremethylester, Zimtaldehyd und substituierte Zimtaldehyde.

Beispiele für Aldehyde der Formel (III) sind beispielsweise Pivalaldehyd (= 2,2-Dimethyl-propanal), 2,2-Dimethyl-butanal, 2,2-Diethyl-butanal, 1-Methyl-cyclopentancarboxaldehyd, 1-Methyl-cyclohexancarboxaldehyd, 2,2-Dimethyl-3-phenylpropanal und 2,2-Dimethyl-3-p-toluylpropanal; Ether aus 2-Hydroxy-2-methylpropanal und Alkoholen wie Propanol, Isopropanol, Butanol und 2-Ethylhexanol; Ester aus 2-Formyl-2-methylpropionsäure oder 3-Formyl-3-methylbuttersäure und Alkoholen wie Propanol, Isopropanol, Butanol und 2-Ethylhexanol; Ester aus 2-Hydroxy-2-methylpropanal und Carbonsäuren wie Buttersäure, Isobuttersäure und 2-Ethylhexansäure; sowie Ether und Ester von 2,2-disubstituierten 3-Hydroxypropanalen, -butanalen oder analogen höheren Aldehyden, insbesondere von 2,2-Dimethyl-3-hydroxypropanal, sowie die im Folgenden als besonders geeignet beschriebenen Aldehyde der Formel (IV).

Als besonders geeignet gezeigt haben sich Polyaldimine der Formel (I)

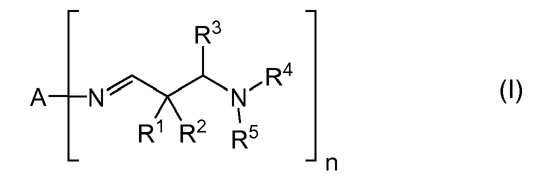

Hierbei steht A für den Rest eines Amins nach Entfernung von n primären aliphatischen Aminogruppen und welcher keine aktiven Wasserstoffatome enthält. Weiterhin steht n für 2 oder 3 oder 4 oder 5, bevorzugt für 2 oder 3. Des Weiteren stehen R¹ und R² entweder unabhängig voneinander jeweils für einen einwertigen Kohlenwasserstoffrest mit 1 bis 12 C-Atomen, oder aber R¹ und R² stehen zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist.

R³ steht für ein Wasserstoffatom oder eine Alkylgruppe oder eine Arylalkylgruppe oder eine Alkoxycarbonylgruppe, insbesondere mit 1 bis 12 C-Atomen.

R⁴ und R⁵ stehen entweder unabhängig voneinander jeweils für einen einwertigen aliphatischen, cycloaliphatischen oder arylaliphatischen Rest mit 1 bis 20 C-Atomen, welcher gegebenenfalls Heteroatome in der Form von Ether-Sauerstoff oder tertiärem Amin-Stickstoff enthält, oder aber R⁴ und R⁵ stehen zusammen für einen zweiwertigen aliphatischen Rest mit 3 bis 20 C-Atomen, der Teil eines, gegebenenfalls substituierten, heterocyclischen Rings mit 5 bis 8, bevorzugt 6, Ringatomen ist, wobei dieser Ring neben dem Stickstoffatom gegebenenfalls weitere Heteroatome in der Form von Ether-Sauerstoff oder tertiärem Amin-Stickstoff enthält.

Zur Herstellung eines Aldimins der Formel (I) wird weiterhin mindestens ein sterisch gehinderter aliphatischer Aldehyd (ALD) der Formel (IV) eingesetzt, 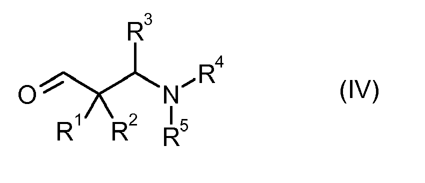 wobei R¹, R², R³, R⁴ und R⁵ die bereits genannten Bedeutungen aufweisen.

Bevorzugt stehen R¹ und R² jeweils für eine Methylgruppe, und R³ steht bevorzugt für ein Wasserstoffatom.

Bevorzugt stehen R⁴ und R⁵ jeweils unabhängig voneinander für Methyl, Ethyl, Propyl, Isopropyl, Butyl, 2-Ethylhexyl, Cyclohexyl oder Benzyl, oder sie bilden zusammen - unter Einbezug des Stickstoffatoms - einen Ring, insbesondere einen Pyrrolidin-, Piperidin,- Morpholin- oder N-Alkylpiperazin-Ring, wobei dieser Ring gegebenenfalls substituiert ist.

Aldehyde (**ALD**) der Formel (IV) sind insbesondere erhältlich als Produkt einer Mannich-Reaktion oder einer der Mannich-Reaktion analogen α-Aminoalkylierung, wie sie aus der Fachliteratur bekannt ist; sie können deshalb auch als Mannich-Basen bezeichnet werden. Ein Aldehyd (Y1) der Formel (V), ein Aldehyd (Y2) der Formel (VI) und ein sekundäres aliphatisches Amin (C) der Formel (VII) werden dabei unter Wasserabspaltung zu einem Aldehyd (**ALD**) umgesetzt, 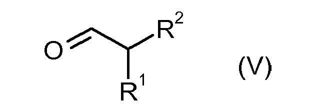 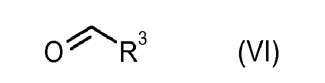 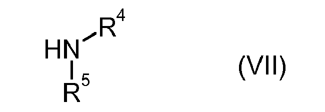 wobei R¹, R², R³, R⁴ und R⁵ die bereits genannten Bedeutungen aufweisen.

Diese Umsetzung kann entweder mit den freien Reagentien Aldehyd der Formel (V) (**Y1**), Aldehyd der Formel (VI) (**Y2**) und Amin (**C**) geführt werden, oder die Reagentien können teilweise oder vollständig in derivatisierter Form eingesetzt werden. So kann der Aldehyd (**Y1**) beispielsweise als Enolat, als Enolether, insbesondere als Silylenolether, oder als Enamin eingesetzt werden. Der Aldehyd (**Y2**) kann beispielsweise in Form eines Oligomeren - im Fall von Formaldehyd insbesondere als 1,3,5-Trioxan oder als Paraformaldehyd - oder als Hydrat, Hemiacetal, Acetal, N,O-Acetal, Aminal oder Hemiaminal eingesetzt werden. Das sekundäre aliphatische Amin (C) schliesslich kann beispielsweise als Salz, insbesondere als Amin-Hydrochlorid oder als Amin-Hydrosulfat, oder als Silylamin eingesetzt werden. Es ist möglich, einen Teil der Reagentien in freier Form und einen Teil in derivatisierter Form einzusetzen, oder nur von derivatisierten Formen auszugehen. Bei der Verwendung von Reagentien in derivatisierter Form fällt der Aldehyd (**ALD**) unter Umständen ebenfalls in derivatisierter Form, beispielsweise als Salz, an; in diesem Fall kann er durch geeignete Aufarbeitung in die freie Form gemäss Formel (IV) übergeführt werden. Je nachdem kann es sinnvoll sein, in solchen Umsetzungsreaktionen zusätzlich Hilfsstoffe wie Lewissäuren oder Katalysatoren einzusetzen.

Weiterhin kann die Umsetzung als Eintopfreaktion geführt werden, in der alle drei Reagentien gleichzeitig miteinander reagieren können; oder aber es kann ein stufenweises Vorgehen gewählt werden, indem zwei der Reagentien vorgängig miteinander umgesetzt werden und das so erhaltene Zwischenprodukt anschliessend mit dem dritten Reagens umgesetzt wird, wobei das Zwischenprodukt isoliert werden kann oder nicht. Als solche Zwischenprodukte geeignet sind insbesondere Iminiumsalze, welche aus der Umsetzung eines Aldehyds (**Y2**), in freier oder derivatisierter Form, mit einem Salz eines sekundären aliphatischen Amins (**C**) erhalten werden und welche sich mit einem Aldehyd (**Y1**), in freier oder derivatisierter Form, zum entsprechenden Salz eines Aldehyds (**ALD**) der Formel (IV) umsetzen lassen. Ein solcherart stufenweises Vorgehen kann den Vorteil haben, mildere Reaktionsbedingungen zu ermöglichen und damit eine höhere Produktausbeute zu liefern.

Weiterhin kann die Umsetzung unter Verwendung von Lösemitteln, insbesondere polaren Lösemitteln wie Wasser oder Alkoholen, durchgeführt werden, oder die Umsetzung kann ohne Verwendung von Lösemitteln erfolgen.

In einer bevorzugten Ausführungsform wird die Umsetzung mit allen Reagenzien in freier Form als Eintopfreaktion geführt und der Aldehyd (**ALD**) nach erfolgter Umsetzung durch Destillation gereinigt. Bevorzugt werden dabei keine organischen Lösemittel eingesetzt.

Als Aldehyd (**Y1**) der Formel (V) geeignet sind beispielsweise die folgenden Aldehyde: Isobutyraldehyd, 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd und Diphenylacetaldehyd. Bevorzugt ist Isobutyraldehyd.

Als Aldehyd (**Y2**) der Formel (VI) geeignet sind beispielsweise die folgenden Aldehyde: Formaldehyd, Acetaldehyd, Propionaldehyd, Butyraldehyd, Isobutyraldehyd, Phenylacetaldehyd, Benzaldehyd und substituierte Benzaldehyde sowie Glyoxylsäureester, insbesondere Glyoxylsäureethylester. Bevorzugt ist Formaldehyd.

Als Amin (**C**) der Formel (VII) geeignet sind beispielsweise die folgenden sekundären aliphatischen Amine: Dimethylamin, Diethylamin, Dipropylamin, Diisopropylamin, Dibutylamin, Diisobutylamin, Di-sek.-Butylamin, Dihexylamin, Di-(2-ethylhexyl)amin, Dicyclohexylamin, N-Methylbutylamin, N-Ethylbutylamin, N-Methylcyclohexylamin, N-Ethylcyclohexylamin, Di-2-methoxyethylamin, Pyrrolidin, Piperidin, N-Methyl-benzylamin, N-Isopropyl-benzylamin, N-tert.Butyl-benzylamin, Dibenzylamin, Morpholin, 2,6-Dimethylmorpholin, Bis-(3-Dimethylaminopropyl)amin, N-Methyl- oder N-Ethylpiperazin.

Als Amin (**C**) bevorzugt sind Dimethylamin, Diethylamin, Diisopropylamin, Dibutylamin, Diisobutylamin, N-Methylcyclohexylamin, N-Methyl-benzylamin, N-Isopropyl-benzylamin, N-tert.Butyl-benzylamin, Dibenzylamin, Pyrrolidin, Piperidin, Morpholin, 2,6-Dimethylmorpholin, N-Methyl- und N-Ethylpiperazin.

Bevorzugt wird der Aldehyd (**ALD**) hergestellt durch die Umsetzung von Isobutyraldehyd als Aldehyd (**Y1**) der Formel (V), Formaldehyd als Aldehyd (**Y2**) der Formel (VI) und einem der Amine ausgewählt aus der Gruppe umfassend Dimethylamin, Diethylamin, Diisopropylamin, Dibutylamin, Diisobutylamin, N-Methylcyclohexylamin, N-Methyl-benzylamin, N-Isopropyl-benzylamin, N-tert.Butyl-benzylamin, Dibenzylamin, Pyrrolidin, Piperidin, Morpholin, 2,6-Dimethylmorpholin, N-Methyl- und N-Ethylpiperazin als Amin (C) der Formel (VII).

Bevorzugte Aldehyde (**ALD**) sind 2,2-Dimethyl-3-dimethylaminopropanal, 2,2-Dimethyl-3-diethylamino-propanal, 2,2-Dimethyl-3-dibutylaminopropanal, 2,2-Dimethyl-3-(N-pyrrolidino)-propanal, 2,2-Dimethyl-3-(N-piperidino)-propanal, 2,2-Dimethyl-3-(N-morpholino)-propanal, 2,2-Dimethyl-3-(N-(2,6-dimethyl)morpholino)-propanal, 2,2-Dimethyl-3-(N-(4-methylpiperazino))-propanal, 2,2-Dimethyl-3-(N-(4-ethylpiperazino))-propanal, 2,2-Dimethyl-3-(N-benzylmethylamino)-propanal, 2,2-Dimethyl-3-(N-benzylisopropylamino)-propanal und 2,2-Dimethyl-3-(N-cyclohexylmethylamino)-propanal. Die bevorzugten Aldehyde (**ALD**) weisen eine vergleichsweise niedrige Basizität auf.

Aldimine der Formel (I) lassen sich, wie bereits beschrieben, direkt aus Polyaminen (**PAM**) mit zwei oder mehr primären Aminogruppen und Aldehyden (**ALD**) der Formel (IV) herstellen, indem ein Polyamin (**PAM**) mit einem Aldehyd (**ALD**) in einer Kondensationsreaktion unter Entfernung von Wasser umgesetzt wird.

Es hat sich gezeigt, dass bei Verwendung von Polyaldiminen der Formel (I) eine Verbesserung der Lagerstabilität der hitzehärtenden Dichtstoffzusammensetzung erzielt werden kann.

Der Anteil von Polyaldimin (**PA**) beträgt typischerweise zwischen 0.3 und 10 Gew.-%, insbesondere zwischen 0.5 und 5 Gew.-%, bevorzugt zwischen 1 und 3 Gew.-%, bezogen auf das Gewicht der hitzehärtenden Dichtstoffzusammensetzung.

Weiterhin bevorzugt ist das Polyaldimin (**PA**) in einer derartigen Menge in der Dichtstoffzusammensetzung vorhanden, dass das Verhältnis der Anzahl Aldiminogruppen zur Anzahl der Isocyanatgruppen einen Wert von 0.2 bis 0.8, insbesondere von 0.3 bis 0.7, aufweist.

Die beschriebene hitzehärtende Dichtstoffzusammensetzung kann bei Bedarf weitere Bestandteile aufweisen. Insbesondere sind dies Füllstoffe (**F**), Polyisocyanate (**PI**)**,** Epoxidgruppen-tragende Reaktivverdünner (**G**), hitzeaktivierbare Härter oder Beschleuniger (**B**') sowie Katalysatoren, Stabilisatoren, insbesondere Hitze- und/oder Lichtstabilisatoren, Thixotropiermittel, Weichmacher, Lösungsmittel, Treibmittel, Farbstoffe und Pigmente, Korrosionsschutzmittel, Tenside, Entschäumer, Haftvermittler und Schlagzähigkeitsmodifikatoren (**SM**).

Bei den Füllstoffen (**F**) handelt es sich hierbei bevorzugt um Glimmer, Talk, Kaolin, Wollastonit, Feldspat, Syenith, Chlorit, Bentonit, Montmorillonit, Calciumcarbonat (Kreide, gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Russ, Graphit, Metallpulver, gemahlene elektrisch leitfähige Polymere, Farbpigmente. Russ sowie andere elektrisch leitfähige Zusätze wie Graphit, Metallpulver, gemahlene elektrisch leitfähige Polymere eignen sich insbesondere als Füllstoffe, da dieses bei einer Beschichtung mittels eines KTL-Lackes zu einer gewissen Leitfähigkeit des Dichtstoffzusammensetzung führen, was sich vorteilhaft auf die Beschichtbarkeit auswirkt.

Als Füllstoff (**F**) sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs (**F**) 3 - 50 Gewichts-%, vorzugsweise 5 - 35 Gewichts-%, insbesondere 5 - 25 Gewichts%, bezogen auf das Gewicht der gesamten Zusammensetzung.

Bei den Polyisocyanaten (**PI**) handelt es sich um Oligomere oder Derivate von monomeren Diisocyanaten, insbesondere von HDI, IPDI, TDI und MDI, welche in der hitzehärtenden Dichtstoffzusammensetzung insbesondere als Vernetzer und/oder Haftvermittler wirken können. Als Polyisocyanate (PI) geeignet sind beispielsweise HDI-Biurete, kommerziell erhältlich beispielsweise als Desmodur^{®} N 100 und N 3200 (von Bayer), Tolonate^{®} HDB und HDB-LV (von Rhodia) und Duranate^{®} 24A-100 (von Asahi Kasei); HDI-Isocyanurate, beispielsweise als Desmodur^{®} N 3300, N 3600 und N 3790 BA (alle von Bayer), Tolonate^{®} HDT, HDT-LV und HDT-LV2 (von Rhodia), Duranate^{®} TPA-100 und THA-1 00 (von Asahi Kasei) und Coronate^{®} HX (von Nippon Polyurethane); HDI-Uretdione, beispielsweise als Desmodur^{®} N 3400 (von Bayer); HDI-Iminooxadiazindione, beispielsweise als Desmodur^{®} XP 2410 (von Bayer); HDI-Allophanate, beispielsweise als Desmodur^{®} VP LS 2102 (von Bayer); IPDI-Isocyanurate, beispielsweise in Lösung als Desmodur^{®} Z 4470 (von Bayer) oder in fester Form als Vestanat^{®} T1890/100 (von Evonik); TDI-Oligomere, beispielsweise als Desmodur^{®} IL (von Bayer); sowie gemischte Isocyanurate auf Basis TDI / HDI, zum Beispiel als Desmodur^{®} HL (von Bayer). Weiterhin geeeignet sind bei Raumtemperatur flüssige Formen von MDI (sogenanntes "modifiziertes MDI"), welche Gemische von MDI mit MDI-Derivaten, wie beispielsweise MDI-Carbodiimiden bzw. MDI-Uretoniminen oder MDI-Urethanen darstellen, bekannt beispielsweise unter Handelsnamen wie Desmodur^{®} CD, Desmodur^{®} PF, Desmodur^{®} PC (alle von Bayer), sowie Gemische aus MDI und MDI-Homologen (polymeres MDI oder PMDI), erhältlich unter Handelsnamen wie Desmodur^{®} VL, Desmodur^{®} VL50, Desmodur^{®} VL R10, Desmodur^{®} VL R20 und Desmodur^{®} VKS 20F (alle von Bayer), Isonate^{®} M 309, Voranate^{®} M 229 und Voranate^{®} M 580 (alle von Dow) oder Lupranat^{®} M 10 R (von BASF).

Als Polyisocyanat (**PI**) bevorzugt sind bei Raumtemperatur flüssige Formen von MDI, sowie die Oligomeren von HDI, IPDI und TDI, insbesondere die Isocyanurate und die Biurete.

Bei den Epoxidgruppen-tragenden Reaktivverdünnern (**G**) handelt es sich insbesondere um:
- Glycidylether von monofunktionellen gesättigten oder ungesättigten, verzweigten oder unverzweigten, zyklischen oder offenkettigen C₄ - C₃₀ Alkoholen, insbesondere ausgewählt aus der Gruppe bestehend aus Butanolglycidylether, Hexanolglycidylether, 2-Ethylhexanolglycidylether, Allylglycidylether, Tetrahydrofurfuryl- und Furfurylglycidylether, Trimethoxysilylglycidylether.
- Glycidylether von difunktionellen gesättigten oder ungesättigten, verzweigten oder unverzweigten, zyklischen oder offenkettigen C₂ - C₃₀ - Alkolen, insbesondere ausgewählt aus der Gruppe bestehend aus Ethylenglykol-, Butandiol-, Hexandiol-, Oktandiolgylcidylether, Cyclohexandimethanoldigylcidylether und Neopentylglycoldiglycidylether.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin oder Trimethylolpropan.
- Glycidylether von Phenol- und Anilinverbindungen insbesondere ausgewählt aus der Gruppe bestehend aus Phenylglycidylether, Kresylglycidylether, p-tert.-Butylphenylglycidylether, Nonylphenolglycidylether, 3-n-Pentadecenyl-glycidylether (aus Cashewnuss-SchalenÖl), N,N-Diglycidylanilin und Triglycdiyl von p-Aminophenol.
- Epoxidierte Amine wie N, N-Diglycidylcyclohexylamin.
- Epoxidierte Mono- oder Dicarbonsäuren insbesondere ausgewählt aus der Gruppe bestehend aus Neodecansäure-glycidylester, Methacrylsäureglycidylester, Benzoesäureglycidylester, Phthalsäure-, Tetra- und Hexahydrophthalsäurediglycidylester und Diglycidylester von dimeren Fettsäuren sowie Terephthalsäure- und Trimelitsäuregylcidylester.
- Epoxidierte di- oder trifunktionelle, nieder- bis hochmolekulare Polyetherpolyole, insbesondere Polyethylenglycol-diglycidylether oder Polypropyleneglycol-diglycidylether.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners (**G**) 0.1 - 20 Gewichts-%, vorzugsweise 1 - 8 Gewichts-%, bezogen auf das Gewicht der gesamten Zusammensetzung.

Bei den hitzeaktivierbaren Härtern oder Beschleunigern (B') handelt es sich insbesondere um Guanamine, Guanidine, Aminoguanidine und deren Derivate; substituierte Harnstoffe, Imidazole und Imidazol-Salze, Imidazoline, Amidoamine sowie Iminoamine.

Als hitzeaktivierbarer Härter oder Beschleuniger (**B'**) besonders bevorzugt sind substituierte Harnstoffe, insbesondere 3-(3-Chlor-4-methylphenol)-1, -dimethylharnstoff (Chlortoluron), oder Aryl-dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron), N,N-Dimethylharnstoff, N-iso-Butyl-N',N'-dimethylharnstoff, 1,1'-(Hexan-1,6-diyl)bis(3,3'-dimethylharnstoff), sowie Imidazole und Imidazol-Salze.

Als hitzeaktivierbarer Härter oder Beschleuniger (**B'**) weiterhin besonders bevorzugt ist ein Amidoamin mit primärer Aminogruppe, insbesondere eines, das aus der Umsetzung von Phthalsäureanhydrid und einem Polyamin mit primären Aminogruppen, insbesondere Diethylentriamin (DETA) oder Triethylentetramin (TETA), erhältlich ist.

In einer weiteren besonders bevorzugten Ausführungsform enthält die hitzehärtende Dichtstoffzusammensetzung weiterhin mindestens einen Katalysator (**KA**), welcher die Hydrolyse von Aldiminogruppen beschleunigt. Derartige Katalysatoren (**KA**) sind insbesondere Säuren, beispielsweise organische Carbonsäuren wie Benzoesäure, Salicylsäure oder 2-Nitrobenzoesäure, organische Carbonsäureanhydride wie Phthalsäureanhydrid, Hexahydrophthalsäureanhydrid und Hexahydromethylphthalsäureanhydrid, Silylester von organischen Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester. Meist bevorzugt wird Salicylsäure oder 2-Nitrobenzoesäure Katalysator (**KA**) verwendet.

Weiterhin ist es besonders vorteilhaft, wenn die hitzehärtende Dichtstoffzusammensetzung weiterhin mindestens einen Katalysator (**KN**), welcher die Reaktion der Isocyanatgruppen beschleunigt, enthält. Derartige Katalysatoren (**KN**), welche die Reaktion der Isocyanatgruppen beschleunigen, sind insbesondere Organozinnverbindungen wie Dibutylzinndiacetat, Dibutylzinndilaurat, Dibutylzinndichlorid, Dibutylzinndiacetylacetonat und Dioctylzinndilaurat, Bismutverbindungen wie Bismuttrioctoat und Bismuttris(neodecanoat), und tertiäre Aminogruppen enthaltende Verbindungen wie 2,2'-Dimorpholinodiethylether und 1,4-Diazabicyclo[2.2.2]octan.

Weiterhin ist es besonders vorteilhaft, wenn die hitzehärtende Dichtstoffzusammensetzung weiterhin mindestens einen Rheologie-Modifizierer (**R**) enthält. Derartige Rheologie-Modifizierer (**R**) sind insbesondere Verdickungsmittel oder Thixotropiermittel, zum Beispiel Harnstoffverbindungen, Polyamidwachse, Bentonite oder pyrogene Kieselsäuren.

Weiterhin ist es besonders vorteilhaft, wenn die hitzehärtende Dichtstoffzusammensetzung weiterhin mindestens einen Schlagzähigkeitsmodifikator (**SM**) enthält. Als besonders geeignete Schlagzähigkeitsmodifikatoren (**SM**) haben sich insbesondere mit hydroxyfunktionellen Polyepoxiden umgesetzte Polyurethanpolymere erwiesen, insbesondere solche, wie sie durch deren Formel (II) in US 2009/0288766 A1 oder durch US 2010/0035041 A1, insbesondere durch deren Formel (I), offenbart sind, deren gesamter Inhalt hiermit durch Bezugnahme eingeschlossen wird. Insbesondere stellen auch die in der bereits vorher beschrieben Vormischung entstehenden Umsetzungsprodukte des Isocyanatgruppen aufweisenden Polyurethanpolymers (**PUP**) mit den im Epoxyharz (**A**) vorkommenden hydroxyfunktionellen Substanzen, insbesondere der Verbindung der Formel (XII), derartige Schlagzähigkeitsmodifikator en (**SM**) dar.

Besonders bevorzugt besteht die hitzehärtende Dichtstoffzusammensetzung im Wesentlichen, d.h. insbesondere zu mehr als 95 Gew.-%, aus:
- Epoxidharz (**A**) mit durchschnittlich mehr als einer Epoxidgruppe pro Molekül
- Dicyandiamid oder einem Aminkomplex einer Lewis-Säure
- Isocyanatgruppen aufweisenden Polyurethanpolymer (**PUP**)
- Polyaldimin (**PA**)
- Füllstoff (**F**)
- Epoxidgruppen-tragenden Reaktivverdünner (**G**)
- hitzeaktivierbarer Härter oder Beschleuniger (**B**')
- Weichmacher
- Katalysator (**KA**), welcher die Hydrolyse von Aldiminogruppen beschleunigt
- Katalysator (**KN**), welcher die Reaktion der Isocyanatgruppen beschleunigt
- Rheologie-Modifizierer (**R**)
- Schlagzähigkeitsmodifikator (**SM**).

Es versteht sich von selbst, dass es sich bei der vorliegenden Erfindung bei Epoxidharz (**A**), hitzeaktivierbarem Härter oder Beschleuniger (**B**), Isocyanatgruppen aufweisendem Polyurethanpolymer (**PUP**), Polyaldimin (**PA**), Füllstoff (**F**), Epoxidgruppen-tragendem Reaktivverdünner (**G**), hitzeaktivierbarem Härter oder Beschleuniger (**B'**), Katalysator (**KA**), Katalysator (**KN**) und Rheologie-Modifizierer (**R**) jeweils um unterschiedliche Substanzen handelt.

In einer Ausführungsform enthält die Zusammensetzung weiterhin mindestens ein physikalisches oder chemisches Treibmittel, insbesondere in einer Menge von 0.1 bis 3 Gewichts-%, bezogen auf das Gewicht der Zusammensetzung. Bevorzugte Treibmittel sind chemische Treibmittel, welche beim Erhitzen, insbesondere auf eine Temperatur von 100 bis 200 °C, ein Gas freisetzen.

Es kann sich hierbei um exotherme Treibmittel handeln, wie beispielsweise Azoverbindungungen, Hydrazinderivate, Semicarbazide oder Tetrazole. Bevorzugt sind Azodicarbonamid und Oxy-bis (benzolsulfonyl-hydrazid), die bei der Zersetzung Energie freisetzen. Weiterhin geeignet sind auch endotherme Treibmittel, wie beispielsweise Natriumbicarbonat/Zitronensäure-Mischungen. Derartige chemische Treibmittel sind beispielsweise unter dem Namen Celogen™ der Firma Chemtura erhältlich. Ebenfalls geeignet sind physikalische Treibmittel, wie sie unter dem Handelsnamen ExpanCel™ der Firma Akzo Nobel vertrieben werden.

Besonders geeignete Treibmittel sind solche, wie sie unter dem Handelsnamen Expancel™ der Firma Akzo Nobel oder Celogen™ der Firma Chemtura erhältlich sind.

Die hitzehärtende Dichtstoffzusammensetzung wird unter Ausschluss von Feuchtigkeit hergestellt und aufbewahrt. Sie ist lagerstabil, d.h. sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität ermittelt.

Die vorgängig im Detail beschriebene hitzehärtende Dichtstoffzusammensetzung eignet sich bestens zur Verwendung als Dichtstoff.

Die hitzehärtende Dichtstoffzusammensetzung zeichnet sich durch eine ausserordentliche Kombination von schneller Hautbildung und hoher Zugfestigkeit aus. Bevorzugt weist sie eine Hautbildungszeit von unter 120 Minuten, insbesondere von 10 bis 100 Minuten, besonders bevorzugt von 20 bis 90 Minuten, sowie eine Zugfestigkeit, gemessen nach DIN EN ISO 527, von mehr als 2.5 MPa, insbesondere von mehr als 2.8 MPa, besonders bevorzugt von mehr als 2.9 MPa, auf.

Die Hautbildungszeit wird im Rahmen dieser Erfindung nach der Methode bestimmt, wie sie im Teil "Beispiele" weiter hinten im Detail beschrieben wird.

Zudem ist die hitzehärtenden Dichtstoffzusammensetzungen nach Aushärtung mittels Wärme weitgehend elastisch und kann über eine ausserordentlich gute Schlagzähigkeit verfügen. Dies ist insbesondere vorteilhaft bei Abdichtungen, welche in ihrem Gebrauch Schlägen oder Bewegungen ausgesetzt sind.

Diese Kombination von schneller Hautbildung und hoher Festigkeit erlaubt es, dass die hitzehärtende Dichtstoffzusammensetzung insbesondere als Dichtstoff im Automobil-Rohbau eingesetzt werden kann, insbesondere im Motorraum oder bei Türen, Kofferraumhauben, Rückwandklappen oder Motorraumhauben. Insbesondere kann er auch Verwendung finden als Dichtstoff bei Bördelfalzverklebungen, wie sie beispielsweise in WO2008/077918 A1 offenbart sind.

In einem weiteren Aspekt der vorliegenden Erfindung deshalb ein Verfahren zum Abdichten, umfassend die Schritte:
i) Applizieren einer hitzehärtenden Dichtstoffzusammensetzung, wie sie vorgängig beschrieben wurde, auf ein Substrat (S), so dass ein Teil der Oberfläche der Dichtstoffzusammensetzung in Kontakt mit Luft steht;
ii) Bildung einer Haut an der Oberfläche der Dichtstoffzusammensetzung, welche in Kontakt mit der Luft steht;
iii) Erhitzen der Dichtstoffstoffzusammensetzung auf eine Temperatur von über 120°C, insbesondere zwischen 160 und 220°C, unter Ausbildung einer ausgehärteten Dichtstoffzusammensetzung.

Als Substrat (S) geeignet sind insbesondere Metalle, insbesondere diejenigen Metalle, welche im Karosseriebau von Fahrzeugen, insbesondere von Automobilen, verwendet werden. Besonders handelt es sich hierbei um Stähle, insbesondere um elektrolytisch verzinkter, feuerverzinkter, beölter Stahl, Bonazink-beschichteter Stahl, und nachträglich phosphatierter Stahl, oder um Aluminium, insbesondere in den im Autobau typischerweise vorkommenden Varianten. Insbesondere handelt es sich um Stahl- oder Aluminium-Bleche.

Der Applikation, d.h. der Auftrag, erfolgt vorzugsweise automatisch und insbesondere in Form einer Raupe. Die Dichtstoffzusammensetzung kann jedoch auch aufgesprüht werden. Ebenso denkbar sind andere Applikationsverfahren wie Swirl-Applikation, Flat-Stream, Mini-Flat-Stream, sowie Dünnstrahlspritzen bei Geschwindigkeiten von > 200 mm/s, oder dergleichen. Weiterhin ist auch ein manueller Auftrag oder eine manuelles Nachbearbeiten von der applizierten Dichtstoffzusammensetzung durch Spachtel oder Pinsel möglich.

Somit betrifft die vorliegende Erfindung in einem weiteren Aspekt auch ein beschichtetes Substrat, welches erhalten wurde durch das Applizieren einer hitzehärtenden Dichtstoffzusammensetzung, wie sie vorgängig im Detail beschrieben wurde, auf die Oberfläche eines Substrates

In einer besonders bevorzugten Ausführungsform wird die hitzehärtende Dichtstoffzusammensetzung auf einen beölten Stahl aufgetragen. Der Vorteil der Zusammensetzung, dass sie auf einem derartigen Substrat gut haftet und eine schnelle Hautbildung aufweist, führt dazu, dass eine hitzehärtende Dichtstoffzusammensetzung schnell mit einem Lack beschichtet werden kann.

Somit ist bevorzugt, dass zwischen Schritt ii) und iii) ein Schritt iia) erfolgt:
iia) Auftragen eines Lackes, insbesondere eines KTL-Lackes, auf die Dichtstoffzusammensetzung.

Der Begriff KTL-Lack ist dem Fachmann im Automobilbau bestens bekannt und bezeichnet einen Lack, welcher in einem KTL-Bad (KTL = Kathodische Tauch-Lackierung) auf ein Blech aufgetragen wird.

Der der Schritt iii) erfolgt vorzugsweise in einem KTL-Ofen.

Durch die Erhitzung der hitzehärtenden Dichtstoffzusammensetzung erfolgt eine weitere Aushärtung, so dass die Dichtstoffzusammensetzung ihre Endfestigkeit erhält.

Die hitzehärtende Dichtstoffzusammensetzung eignet sich zum Abdichten, insbesondere von Spalten.

Somit ist bevorzugt, dass die hitzehärtende Dichtstoffzusammensetzung im Schritt i) auf oder in einen Spalt appliziert wird, der durch zwei Oberflächen vom Substrat (**S**) und einem zweiten Substrat (**S2**) begrenzt wird, wobei das zweite Substrat (**S2**) aus dem gleichen oder einem verschiedenen Material wie das Substrat (**S**) ist.

Insbesondere wird die hitzehärtende Dichtstoffzusammensetzung in Bereichen appliziert, wo ein Blech ein zweites Blech überragt und so eine Schnittfläche, bzw. Schnittkante, exponiert ist. Die hitzehärtende Dichtstoffzusammensetzung wird so appliziert, dass diese Schnittkante und Schnittfläche abgedeckt ist. Somit dichtet die Dichtstoffzusammensetzung nicht nur den Spalt ab, sondern auch die Schnittkante und ermöglicht es dadurch, beide vor Korrosion zu schützen.

Somit entsteht aus dem vorgängig beschriebenen Verfahren ein abgedichteter Artikel.

### Beschreibung der Zeichnungen

Im Folgenden wird die Erfindung anhand von bevorzugten Ausführungsbeispielen mit Hilfe der Figuren näher beschrieben, wobei darauf hingewiesen wird, dass nur die für das unmittelbare Verständnis der Erfindung wesentlichen Elemente gezeigt sind. Gleiche Elemente sind in den verschiedenen Figuren mit gleichen Bezugszeichen gekennzeichnet. Weiterhin wird darauf hingewiesen, dass es sich bei den hier gezeigten Figuren um schematische Darstellungen ohne Grössenbezüge handelt.

Es zeigen:
- Fig. 1: einen schematischen Querschnitt durch eine Verbundstelle von zwei Blechen;
- Fig. 2: einen schematischen Querschnitt durch eine Verbundstelle nach Behandlung mit KTL-Lack ohne Verwendung des erfindungsgemässen Dichtstoffes;
- Fig. 3: einen schematischen Querschnitt durch eine Verbundstelle nach Applikation des Dichtstoffs;
- Fig. 4: einen schematischen Querschnitt durch eine Verbundstelle nach Behandlung mit KTL-Lack unter Verwendung des erfindungsgemässen Dichtstoffes;
- Fig. 5: einen schematischen Querschnitt durch eine Verbundstelle nach Behandlung mit KTL-Lack unter Verwendung des erfindungsgemässen Dichtstoffes und bei Wärmebehandlung.

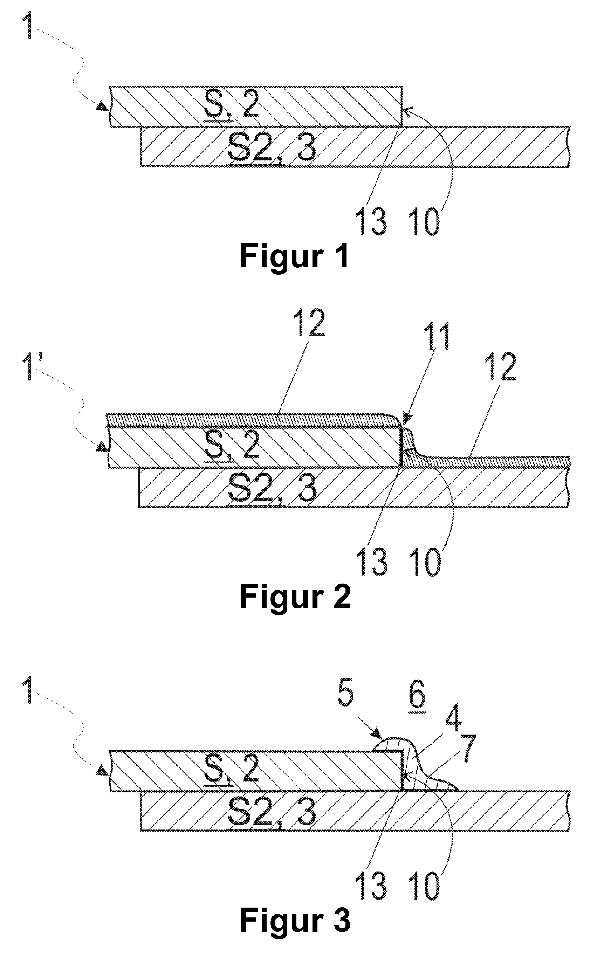

Die Figuren 1, 3, 4 und 5 zeigen zudem einzelne Zwischenstufen eines Verfahrens zum Abdichten.

Figur 1 zeigt schematisch zwei Substrate (**S**) 2, (**S2**) 3, die miteinander verbunden sind, beispielsweise durch einen Klebstoff oder einen Schweisspunkt. In der hier gezeigten Ausführungsform ist ein Verbund von zwei überlappenden Blechen (**S**) 2, (**S2**) 3 gezeigt. Zwischen den Blechen bildet sich ein Spalt 13. Die Bleche sind an der Oberfläche beölt. Das erste Blech (**S**) 2 weist hierbei eine Schnittfläche 10 auf. Diese Schnittfläche weist - durch den Schneidprozess bedingt - kein Öl mehr an der Blechoberfläche auf.

Figur 2 dient zur Illustration eines der Hauptprobleme des Standes der Technik. Figur 2 zeigt schematisch einen Verbund, wie er in Figur 1 gezeigt wurde, bei dem ohne erfindungsgemässen Dichtstoff direkt ein Lack 12, insbesondere ein KTL-Lack 12, auf den Verbund 1' appliziert wurde. Der Einfachheit halber wird hier der Lackauftrag lediglich auf einer Seite des Verbundes dargestellt. Es bildet sich insbesondere an der Schnittkante 11 eine Stelle, wo der Lack nicht abgeschieden wurde und das Metall nicht bedeckt wurde. Diese Schnittkante 11 ist Teil der Schnittfläche 10, welche keine Ölbeschichtung mehr aufweist.

Figur 3 zeigt schematisch einen Verbund 1, wie er in Figur 1 gezeigt wurde, bei dem in einem ersten Schritt i) eine erfindungsgemässe hitzehärtende Dichtstoffzusammensetzung 4 auf ein Substrat (**S**) 2, d.h. das erste Blech, appliziert wurde, so dass ein Teil der Oberfläche 5 der Dichtstoffzusammensetzung in Kontakt mit Luft 6 steht. Des Weiteren erfolgte der Dichtstoffauftrag so, dass er auch auf dem zweiten Blech mit aufgetragen wurde. Im Schritt ii) bildet sich nun eine Haut 7 an der Oberfläche der Dichtstoffzusammensetzung, welche in Kontakt mit der Luft 6 steht.

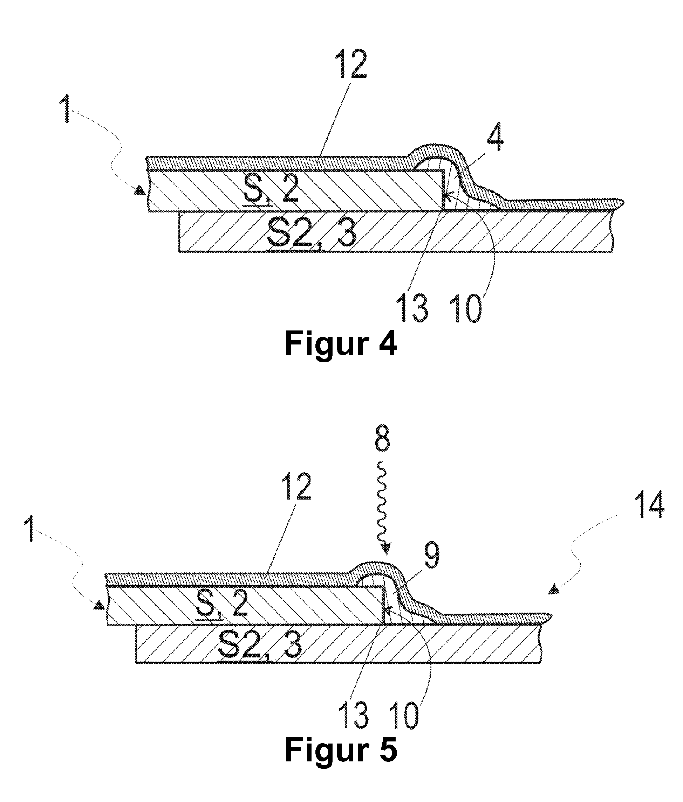

Figur 4 zeigt schematisch den Verbund 1, wie er in Figur 3 beschrieben wurde, bei welchem nun nach Schritt ii) in einem Schritt iia) ein Lack 12, insbesondere ein KTL-Lack 12, aufgetragen wurde. Der Einfachheit halber wird hier -wie in Figur 2- der Lackauftrag lediglich auf einer Seite des Verbundes dargestellt. Der Lack 12 bedeckt die (äussere, d.h. dem Lackbad exponierte) Oberfläche des Verbundkörpers vollständig. Insbesondere bedeckt er die Schnittkante 11 sowie die Schnittfläche 10 vollständig, so dass die zwei Substrate gut geschützt sind.

Figur 5 schliesslich zeigt schematisch den Verbund 1, wie er in Figur 4 beschrieben wurde, bei welchem nun in einem nachfolgenden weiteren Schritt iii) die Dichtstoffstoffzusammensetzung auf eine Temperatur von über 140°C, insbesondere zwischen 160 und 200°C, erhitzt wird. Dieses Erhitzen erfolgt durch eine Wärmequelle 8, und stellt hier schematisch einen KTL-Ofen dar. Durch das Erhitzen bedingt, härtet die Dichtstoffstoffzusammensetzung 4 aus, und es bildet sich eine ausgehärtete Dichtstoffzusammensetzung 9. Es bildet sich somit ein abgedichteter Artikel 14. In diesem abgedichteten Artikel sind die Schnittkanten 11 und Schnittflächen 10 der Bleche gut und verlässlich geschützt vor dem Einfluss von korrodierenden Medien.

### Beispiele

Die im Folgenden aufgeführten Beispiele dienen lediglich zur Illustration der vorliegenden Erfindung.

Es wurden die in Tabelle 1 angegebenen Rohstoffe verwendet.

**Tabelle1. Eingesetzte Rohstoffe.**

| | |
|---|---|
| D.E.R. 330 (Bisphenol-A-diglycidylether = *"DGEBA"*) | Dow |
| Poly bd^{®} R-45HTLO (Hydroxylterminertes Polybutadien) (OH-Equivalentgewicht = ca. 1200 g/Eq) | Arkema |
| Isophorondiisocyanat (= "*IPDI*") | Evonik |
| 1-Amino-3-amino¬methyl-3,5,5-trimethylcyclohexan (Isophorondiamin = *"IPDA"*) | Evonik |
| Omicure^{®} BC-120 (= *"BC120"*) (BCl₃-Aminkomplex) | Emerald Performance Materials |
| Dicyandiamid (= "*Dicy*") (micronisiert : Korngrösse: 98% < 6 µm) | Evonik |

### Herstellung einer Vormischung enthaltend Isocyanatgruppen aufweisendes Polyurethanpolymer und Epoxidharz: VM1

417.5 g Poly bd^{®} R-45HTLO und 154.2 g *DGEBA* wurden mit 328.6 g Diisodecylphthalat (DIDP) unter Vakuum bei 80°C verrührt. Dazu wurde 0.8 g Katalysatorlösung (10 Gew.-% Dibutylzinndilaurat (DBTDL) in Diisononylphthalat) dazugegeben. Anschliessend wurde unter Rühren 98.9 g *IPDI* dazugegeben und während 2 Stunden bei 80°C gerührt. Die so gebildete Vormischung aus Polyurethanpolymer und Epoxidharz wies einen NCO-Gehalt von 1.6 Gew.-% und einen Epoxid-Gehalt von 0.82 mol eq/kg auf. Die als ***VM1*** bezeichnete Vormischung wurde so eingesetzt.

### Herstellung eines Polyaldimins: PA-1

In einem Rundkolben wurden unter Stickstoffatmosphäre 14.55 g *IPDA* vorgelegt. Unter kräftigem Rühren wurden aus einem Eintropftrichter 30.00 g 2,2-Dimethyl-3-(N-morpholino)-propanal zugegeben. Danach wurden die flüchtigen Bestandteile im Vakuum entfernt (10 mbar, 80°C). Ausbeute: 40.9 g eines klaren, farblosen Öls mit einem Amingehalt von 8.29 mmol N/g.

### Herstellung eines Polyaldimins: PA-2

In einem Rundkolben wurden unter Stickstoffatmosphäre 20.00 g *IPDA* vorgelegt. Unter kräftigem Rühren und Eiskühlung wurden aus einem Eintropftrichter 18.63 g Isobutyraldehyd zugegeben und die Mischung während 30 Minuten bei Raumtemperatur nachgerührt. Danach wurden die flüchtigen Bestandteile im Vakuum entfernt (10 mbar, 80°C). Ausbeute: 32.6 g eines klaren, farblosen Öls mit einem Amingehalt von 7.17 mmol N/g.

### Herstellung von hitzehärtenden Dichtstoffzusammensetzungen

Es wurden mit den in Tabelle 2 in Gewichtsteilen angegebenen Inhaltshaltsstoffen unterschiedliche hitzehärtenden Dichtstoffzusammensetzungen unter Ausschluss von Feuchtigkeit hergestellt. Nach der Herstellung wurden die Zusammensetzungen in feuchtigkeitsdichte Aluminiumkartuschen abgefüllt und direkt für die Prüfungen verwendet.

### Messmethoden

Es wurden von den Zusammensetzungen die folgenden Eigenschaften gemessen:

### Hautbildung

Zur Bestimmung der Hautbildungszeit ("HBZ") wurde der raumtemperaturwarme Dichtstoff in einer Schichtdicke von ca. 3 mm auf Pappkarton aufgetragen und im Normklima ("NK"; 23±1 °C, 50±5% relative Luftfeuchtigkeit) die Zeit bestimmt, die es dauerte, bis beim leichten Antippen der Oberfläche des Dichtstoffs mittels einer Pipette aus LDPE erstmals keine Dichtstoff-Rückstände auf der Pipette mehr zurückblieben.

### Zugfestigkeit

Zur Bestimmung der Zugfestigkeit wurde der Dichtstoff auf eine PTFE-Platte appliziert, mit einer weiteren PTFE-Platte bedeckt und auf eine Schichtdicke von 2 mm verpresst und anschliessend 20 Minuten bei 175 °C ausgehärtet. Von dem so gebildeten Film wurden Zugfestigkeitsprüfkörper herausgestanzt und die Zugfestigkeit gemäss DIN EN 527 bei einer Zuggeschwindigkeit von 200 mm/min bestimmt und in Tabelle 2 angegeben. Konnten keine Probekörper hergestellt werden, wurde "x" angegeben.

### Härtung

Auf ein beöltes (3g/m²) Stahlblech (feuerverzinkt) (100mm x 25mm x 0.7mm) wird die hitzehärtende Dichtstoffzusammensetzung mittels auf die Kartusche aufgeschraubter Düse in Form einer Dreiecksraupe appliziert. Diese wird für 35 Minuten bei 175°C ausgehärtet. Wenn die Raupe auf Raumtemperatur abgekühlt ist, wird diese an einem Dorn mit 5 cm Durchmesser gebogen. Nach dem Biegen wird die Raupe in der Mitte aufgeschnitten und vom Substrat mit der Hand abgeschält (allenfalls ist es nötig, die Raupe substratnah aufzuschneiden). Ist die Härtung vollständig erfolgt, ist die gesamte Raupe ausgehärtet und wird in den Tabellen 2 und 3 als "Ja" beurteilt. Ist das Dichtstoff-Material im Inneren der Raupe noch ähnlich weich wie bei der Applikation, ist die Härtung kaum erfolgt und wird in den Tabellen 2 und 3 als "Nein" beurteilt. Sind lediglich geringe Anteile des Materials im Innern nicht ausgehärtet, ist die Aushärtung ungenügend und wird in den Tabellen 2 und 3 als "Teils" beurteilt.

**Tabelle 2. Zusammensetzungen und Eigenschaften.**

| | ***1*** | ***2*** | ***R1*** | ***R2*** | ***R3*** | ***R4*** | ***R5*** | ***R6*** | ***R7*** | ***3*** | ***R8*** | **R9** |
|---|---|---|---|---|---|---|---|---|---|---|---|---|
| ***VM1*** | 47.7 | 47.7 | 47.7 | 47.7 | 47.7 | 47.7 | 47.7 | 47.7 | 47.7 | 47.7 | 47.7 | 47.7 |
| *Dicy* | 1.0 | | | | | | | | | 1.0 | | |
| BC *120* | | 1.0 | | | | | | | | | | |
| DMA¹ | | | | 1.0 | | | | | | | | |
| 2-Methylimidazol | | | | | 1.0 | | | | | | | |
| PSA² | | | | | | 1.0 | | | | | | |
| Adipinsäuredihydrazid | | | | | | | 1.0 | | | | | |
| Amidoamin³ | | | | | | | | 2.0 | 2.0 | | | 2.0 |
| Katalysator⁴ | 1.2 | 1.2 | 1.2 | 1.2 | 1.2 | 1.2 | 1.2 | 1.2 | 1.2 | 1.2 | 1.2 | 1.2 |
| ***PA-1*** | | | | | | | | | | 1.8 | 1.8 | 1.8 |
| ***PA-2*** | 1.2 | 1.2 | 1.2 | 1.2 | 1.2 | 1.2 | 1.2 | 1.2 | | | | |
| Kreide | 35.2 | 35.2 | 36.2 | 35.2 | 35.2 | 35.2 | 35.2 | 34.2 | 33.9 | 34.6 | 35.6 | 33.6 |
| Calciumoxid | 3.7 | 3.7 | 3.7 | 3.7 | 3.7 | 3.7 | 3.7 | 3.7 | 3.7 | 3.7 | 3.7 | 3.7 |
| SiO₂⁵ | 10.0 | 10.0 | 10.0 | 10.0 | 10.0 | 10.0 | 10.0 | 10.0 | 10.0 | 10.0 | 10.0 | 10.0 |
| | | | | | | | | | | | | |
| HBZ⁶ [min] | 30 | 90 | 60 | 30 | n.g.⁷ | 30 | 90 | 120 | >240 | 30 | 180 | 150 |
| ZF⁸ [MPa] | 3 | 3 | x | x | x | x | x | 2 | 1 | 3 | x | 2 |
| Härtung | Ja | Ja | Nein | Nein | Teils | Nein | Nein | Ja | Ja | Ja | Nein | Ja |

| | | | | | | | | | | | | |
|---|---|---|---|---|---|---|---|---|---|---|---|---|
| ¹DMA=N,N-Dimethylharnstoff ²PSA=Pyromellithsäureanhydrid ³Amidoamin=1:1-Addukt von Phthalsäureanhydrid und Diethylentriamin ⁴Katalysator=1 Gew.-% Benzoesäure in Diisononylphthalat ⁵SiO₂=pyrogene Kieselsäure ⁶HBZ=Hautbildungszeit ⁷n.g. = nicht gemesssen ⁸ZF=Zugfestigkeit | | | | | | | | | | | | |

Tabelle 2 zeigt, dass die erfindungsgemässen Beispiele 1, 2 und 3 enthaltend Dicyandiamid oder einen Aminkomplex einer Lewis-Säure eine gute Kombination von schneller Hautbildung, hoher Zugfestigkeit und guter Aushärtung aufweisen. Die Vergleichsbeispiele ***R1**, **R2***, ***R3***, ***R4*** und ***R5*** enthaltend andere in der Epoxychemie verwendete hitzeaktivierbare Härter oder Beschleuniger härten in der Hitze nicht oder nicht vollständig. Die Vergleichsbeispiele ***R6*** oder ***R7**,* welche ein Amidoamin enthaltend eine primäre Aminogruppe, welches ein 1:1-Addukt von Phthalsäureanhydrid und Diethylentriamin darstellt, enthalten, härten zwar gut, haben aber eine lange Hautbildungszeit und eine tiefere Zugfestigkeit. Auch der Vergleich des Beispiels 3 mit den Vergleichsbeispiele ***R8*** und ***R9*** zeigt, dass ohne Dicyandiamid bzw. ohne Aminkomplex einer Lewis-Säure (R8) keine Hitzehärtung eintritt. Der Zusatz des Amidoamins bewirkt zwar eine gute Härtung, führt aber wiederum zu langer Hautbildungszeit und zu tieferer Zugfestigkeit.

### Bezugszeichenliste

- 1,1': Verbund
- 2, S: erstes Substrat
- 3, S2: zweites Substrat
- 4: hitzehärtende Dichtstoffzusammensetzung
- 5: Oberfläche der Dichtstoffzusammensetzung
- 6: Luft
- 7: Haut
- 8: Wärmequelle
- 9: ausgehärtete Dichtstoffzusammensetzung
- 10: Schnittfläche
- 11: Schnittkante
- 12: Lack, KTL-Lack
- 13: Spalt
- 14: Abgedichteter Artikel

## Patentansprüche

1. Hitzehärtende Dichtstoffzusammensetzung umfassend
- mindestens ein Epoxidharz (**A**) mit durchschnittlich mehr als einer Epoxidgruppe pro Molekül;
- mindestens einen hitzeaktivierbaren Härter oder Beschleuniger (**B**) ausgewählt aus der Gruppe bestehend aus Dicyandiamid oder einem Aminkomplex einer Lewis-Säure;
- mindestens ein Isocyanatgruppen aufweisendes Polyurethanpolymer (**PUP**); sowie
- mindestens ein Polyaldimin (**PA**).

2. Hitzehärtende Dichtstoffzusammensetzung gemäss Anspruch 1, **dadurch gekennzeichnet, dass** das Gewichtsverhältnis von Epoxidharz (**A**) zu Isocyanatgruppen aufweisendem Polyurethanpolymer (**PUP**) zwischen 0.1 bis 0.5, insbesondere zwischen 0.15 bis 0.4, bevorzugt zwischen 0.2 bis 0.3, beträgt.

3. Hitzehärtende Dichtstoffzusammensetzung gemäss einem der vorhergehenden Ansprüche, **dadurch gekennzeichnet, dass** das Polyaldimin (**PA**) in einer derartigen Menge in der Dichtstoffzusammensetzung vorhanden ist, dass das Verhältnis der Anzahl Aldiminogruppen zur Anzahl der Isocyanatgruppen einen Wert von 0.2 bis 0.8, insbesondere von 0.3 bis 0.7, aufweist.

4. Hitzehärtende Dichtstoffzusammensetzung gemäss einem der vorhergehenden Ansprüche, **dadurch gekennzeichnet, dass** das Polyaldimin (**PA**) am Kohlenstoffatom in alpha-Stellung zum Kohlenstoff der Aldiminogruppe kein Wasserstoffatom aufweist.

5. Hitzehärtende Dichtstoffzusammensetzung gemäss einem der vorhergehenden Ansprüche, **dadurch gekennzeichnet, dass** das Polyaldimin (**PA**) die Formel (I) aufweist, 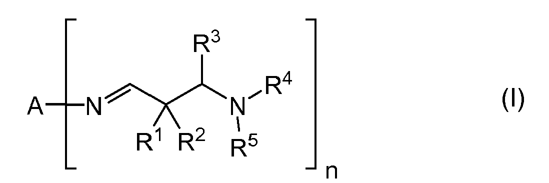 wobei
A für den Rest eines Amins nach Entfernung von n primären aliphatischen Aminogruppen steht und keine aktiven Wasserstoffatome enthält, n für 2 oder 3 oder 4 oder 5, bevorzugt 2 oder 3, steht und
R¹ und R² entweder
unabhängig voneinander jeweils für einen einwertigen Kohlenwasserstoffrest mit 1 bis 12 C-Atomen stehen,
oder
zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist, stehen;
R³ für ein Wasserstoffatom oder eine Alkylgruppe oder eine Arylalkylgruppe oder eine Alkoxycarbonylgruppe, insbesondere mit 1 bis 12 C-Atomen, steht;
R⁴ und R⁵ entweder
unabhängig voneinander jeweils für einen einwertigen aliphatischen, cycloaliphatischen oder arylaliphatischen Rest mit 1 bis 20 C-Atomen stehen, welcher gegebenenfalls Heteroatome in der Form von Ether-Sauerstoff oder tertiärem Amin-Stickstoff enthält,
oder
zusammen für einen zweiwertigen aliphatischen Rest mit 3 bis 20 C-Atomen, der Teil eines, gegebenenfalls substituierten, heterocyclischen Rings mit 5 bis 8, bevorzugt 6, Ringatomen ist, wobei dieser Ring neben dem Stickstoffatom gegebenenfalls weitere Heteroatome in der Form von Ether-Sauerstoff oder tertiärem Amin-Stickstoff enthält, stehen.

6. Hitzehärtende Dichtstoffzusammensetzung gemäss einem der vorhergehenden Ansprüche, **dadurch gekennzeichnet, dass** das Dicyandiamid eine mittlere Teilchengrösse von kleiner als 12 µm, insbesondere von 1 bis 10 µm, bevorzugt zwischen 5 und 9 µm, aufweist.

7. Hitzehärtende Dichtstoffzusammensetzung gemäss einem der vorhergehenden Ansprüche, **dadurch gekennzeichnet, dass** die Dichtstoffzusammensetzung weiterhin mindestens einen Katalysator (**KA**), welcher die Hydrolyse von Aldiminogruppen beschleunigen, enthält.

8. Hitzehärtende Dichtstoffzusammensetzung gemäss einem der vorhergehenden Ansprüche, **dadurch gekennzeichnet, dass** die Dichtstoffzusammensetzung weiterhin mindestens einen hitzeaktivierbaren Härter oder Beschleuniger (**B'**) enthält, welcher ausgewählt ist aus der Gruppe bestehend aus Guanaminen, Guanidinen, Aminoguanidinen und deren Derivaten; substituierten Harnstoffen, insbesondere 3-(3-Chlor-4-methylphenyl)-1, 1-dimethylharnstoff (Chlortoluron), oder Aryl-dimethylharnstoffen, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron), N,N-Dimethylharnstoff, N-iso-Butyl-N',N'-dimethylharnstoff, 1,1'-(Hexan-1,6-diyl)bis(3,3'-dimethylharnstoff) sowie Imidazolen, Imidazol-Salzen, Imidazolinen, Amidoaminen und Iminoaminen.

9. Hitzehärtende Dichtstoffzusammensetzung gemäss Anspruch 8, **dadurch gekennzeichnet, dass** der Härter oder Beschleuniger (**B'**) ein Amidoamin mit primärer Aminogruppe ist, welches aus der Umsetzung von Phthalsäureanhydrid und einem Polyamin mit primären Aminogruppen, insbesondere Diethylentriamin (DETA) oder Triethylentetramin (TETA), erhältlich ist.

10. Beschichtetes Substrat erhalten durch das Applizieren einer hitzehärtenden Dichtstoffzusammensetzung gemäss einem der Ansprüche 1 bis 9 auf die Oberfläche eines Substrates.

11. Verfahren zum Abdichten, umfassend die Schritte
i) Applizieren einer hitzehärtenden Dichtstoffzusammensetzung (4) gemäss einem der Ansprüche 1 bis 9 auf ein Substrat (S)(2), so dass ein Teil der Oberfläche (5) der Dichtstoffzusammensetzung in Kontakt mit Luft (6) steht;
ii) Bildung einer Haut (7) an der Oberfläche der Dichtstoffzusammensetzung, welche in Kontakt mit der Luft steht;
iii) Erhitzen der Dichtstoffstoffzusammensetzung auf eine Temperatur von über 120°C, insbesondere zwischen 160 und 220°C, unter Ausbildung einer ausgehärteten Dichtstoffzusammensetzung (9).

12. Verfahren zum Abdichten gemäss Anspruch 11, **dadurch gekennzeichnet, dass** zwischen Schritt ii) und iii) ein Schritt iia) erfolgt:
iia) Auftragen eines Lackes (12), insbesondere eines KTL-Lackes, auf die Dichtstoffzusammensetzung.

13. Verfahren gemäss Anspruch 11 oder 12, **dadurch gekennzeichnet, dass** der Schritt iii) in einem KTL-Ofen erfolgt.

14. Verfahren gemäss Anspruch 11 oder 12 oder 13, **dadurch gekennzeichnet, dass** die hitzehärtende Dichtstoffzusammensetzung (4) im Schritt i) auf oder in einen Spalt (13) appliziert wird, der durch zwei Oberflächen vom Substrat (S)(2) und einem zweiten Substrat (S2)(3) begrenzt wird, wobei das zweite Substrat (S2) aus dem gleichen oder einem verschiedenen Material wie das Substrat (S) ist.

15. Abgedichteter Artikel (14), erhalten aus einem Verfahren gemäss einem der Ansprüche 11 bis 14.
